# EUROPEAN PATENT APPLICATION

(11) **EP 3 726 251 A1**
(43) Date of publication of application: **21.10.2020**
(21) Application number: 19170044.2
(22) Date of filing: 18.04.2019
(51) Int. Cl.: G01S 17/93, G01S 7/487, G01S 7/481, G01S 7/48, G01S 17/02

(54) **A CONCEPT FOR SENSING AN ENVIRONMENT USING LIDAR**

(71) Applicant: Bayerische Motoren Werke Aktiengesellschaft, 80809 München (DE)
(72) Inventor: Mahler, Grant, Sunnyvale, CA 94089 (US)

(57) **Abstract**

Example embodiments of the present disclosure relate to a Lidar sensor device 100 comprising a photosensitive sensor circuitry 110 configured to generate at least one digital measurement signal 112 in response to detected light 130, wherein an amplitude range of the digital measurement signal 112 ranges from zero to a maximum output level. The Lidar sensor device 100 further comprises an output terminal 120 configured to output the digital measurement signal 112 with the amplitude range from zero to a maximum output level.

Further example embodiments of the present disclosure relate to a Lidar system 200, which comprises the previously described Lidar sensor device 100 and a processor circuitry 210 coupled to the Lidar sensor device's output terminal 120 and configured to determine characteristics of a target 140 based on the digital measurement signal 112 having the amplitude range from zero to the maximum output level.

Further example embodiments of the present disclosure relate to a Lidar method 600, which intends to generate at least one digital measurement signal 112 in response to the detected light 130 reflected by the target 140, wherein an amplitude range of the digital measurement signal 112 ranges from zero to a maximum output level. The Lidar method 600 further suggests to output the digital measurement signal 112 with the amplitude range from zero to a maximum output level for determining characteristics of the target 140.

## Description

### Field

Examples relate to a Lidar sensor device and a Lidar system comprising the Lidar sensor device. Particularly but not exclusively, the Lidar system can be used for automotive applications for characterizing targets in an environment of a vehicle.

### Background

Environmental sensor systems, comprising, for example a light imaging, detection and ranging sensor (Lidar), currently use low level detection algorithms to determine a classification of returns from background noise. Some conventional pulsed operation Lidar sensors measure a distance (and in some cases velocity) to one or more targets with pulsed radiation and detect reflected pulses with a photosensitive diode, a complementary metal-oxide-semiconductor (CMOS) or equivalent. In particular but not exclusively, the targets can be a vehicles. Differences in laser return times are indicative of the distance and can then be used to generate digital 3-D representations of the target.

For example, the photosensitive diode, which serves as a detector, converts the reflected pulses into an electric current with a voltage. An analog signal (e.g. current or voltage) is then converted to a digital signal. In this conversion step, conventionally filtering with a threshold takes place: For example, if the voltage is below a certain threshold, it is categorized as noise and filtered out; if the voltage is above the set threshold, the analog signal is determined to represent a return and is not filtered. After this filtration, the digital signal is transmitted to a computing unit, where an algorithm, such as a k-means clustering algorithm, is used, for example, for a characterization of the target or the vehicles. The characterization may yield, for example, characteristics of the target, such as dimensions, structure or surface condition.

Patent EP1563244 B1 describes a Lidar system in which a threshold circuit is used to filter noise in a photo detector when the noise falls below a predefined threshold.

Filtering the noise comes with multiple problems for environmental sensor systems: The threshold, for example, does not account for environmental conditions (e.g. rain, dirt or further noise sources, such as bugs or the sun). Thus, filtering may discard potentially valuable returns of the analog signal may oversimplify the analog signal and may adversely affect an accuracy of the characterization of the vehicles.

Therefore, it can be considered as an object of the present disclosure to provide an environmental sensor system with an improved accuracy of characterizing the vehicles.

### Summary

According to a first aspect, example embodiments of the present disclosure relate to a Lidar sensor device comprising a photosensitive sensor circuitry configured to generate at least one digital measurement signal in response to detected light, wherein an amplitude range of the digital measurement signal ranges from zero to a maximum output level. The Lidar sensor device further comprises an output terminal configured to output the digital measurement signal with the amplitude range from zero to the maximum output level.

The photosensitive sensor circuitry can, for example, include a photosensitive diode or other photosensitive components to provide the digital measurement signal. The digital measurement signal can be obtained, for example, from a conversion of a raw analog electrical signal, which can be generated by the photosensitive sensor circuitry based on the photoelectric effect. The amplitude range of the digital measurement signal ranges from zero to a maximum output level of an analog-to-digital converter (ADC). This means that the digital measurement signal may also include signal components of lower energy which would be filtered out by conventional Lidar systems. Such signal components of lower energy, such as noise or signal reflections of lower energy, may be an additional useful source of information for subsequent signal processing of the digital measurement signal. Thus, in some applications, analyzing the measurement signal with the amplitude range from zero to the maximum output level may improve a characterization of the target. In case of an automotive application, the target can be, for example, a traffic participant, such as a vehicle or a pedestrian, or obstructions on and beside the road.

In some example embodiments, the Lidar sensor device comprises a housing enclosing the photosensitive sensor circuitry. Further, the housing comprises the output terminal as a signal interface between the photosensitive sensor circuitry and external processor circuitry for determining characteristics of a target based on the digital measurement signal.

The housing can enclose the photosensitive sensor circuitry to separate it from its environment. Thus, the photosensitive sensor circuitry can be protected from environmental influences, for example, weather or climate conditions. Further, the output terminal can be integrated in the housing. The output terminal can be an interface, such as a connection port which can be coupled to the external processor which is located outside the housing.

According to a second aspect, example embodiments of the present disclosure relate to a Lidar system, which comprises the previously described Lidar sensor device and a processor circuitry coupled to the Lidar sensor device's output terminal and configured to determine characteristics of a target based on the digital measurement signal having the amplitude range from zero to the maximum output level.

The processor circuitry can be, for example, a central processing unit (CPU), a graphics processing unit (GPU), an image signal processor (ISP), a digital signal processor (DSP), a field-programmable gate array (FPGA), a micro-controller (MC) or any other programmable hardware. Using the processor circuitry, the characteristics of the target can be determined from the digital measurement signal having the amplitude range from zero to the maximum output level.

For example, the processor circuitry can be configured to determine properties of the target by analyzing the digital measurement signal coming from the output terminal of the Lidar sensor device.

As previously described, unlike conventional Lidar systems using, for example, threshold filtering, example embodiments of the present disclosure provide the digital measurement signal having the amplitude range from zero to the maximum output level.

Environmental influences like rain, sunlight or bugs may increase a signal-to-noise ratio of the digital measurement signal, which may hinder the conventional Lidar systems in classifying the target.

Since low-energy components of the digital measurement signal can comprise additional useful information on targets, the processor circuitry addressed by the present disclosure can be utilized to characterize the target reliably from the digital measurement signal with increasing signal-to-noise ratio.

In some example embodiments of the present disclosure, the digital measurement signal is indicative of a spectral amplitude profile comprising respective signal amplitudes for a plurality of light wavelengths. The respective signal amplitude ranges for the plurality of light wavelengths range from zero to the maximum output level, wherein the processor circuitry is configured to determine characteristics of the target based on the spectral amplitude profile.

The digital measurement signal, for example can comprise a plurality of signal amplitudes within a spectral range comprising the plurality of light wavelengths. In some example embodiments of the present disclosure, the spectral range can be located, for example, around 1550 nm or 905 nm depending on the photosensitive sensor circuitry. The spectral amplitude profile comprising the signal amplitudes within the spectral range can be indicative of characteristics of the target. Thus, using the processor circuitry, the characteristics of the target can be determined from the spectral amplitude profile.

In some example embodiments, the processor circuitry further comprises a machine learning network configured to classify the target based on comparing the spectral amplitude profile with predetermined target-specific amplitude signatures.

The machine learning network can be, for example, a Support Vector Machine or a neural network. Those, for example, can be trained with a plurality of measurement signals as training signals to recognize the predetermined target-specific amplitude signatures of the spectral amplitude profile. The predetermined target-specific amplitude signatures, for example, can be indicative of the surface condition of the target. Thus, the machine learning network can classify the target regarding its color For example, the machine learning network may distinguish between variously colored vehicles or it may recognize a rescue vehicle due to its specific color, which may be useful regarding automotive applications of the Lidar system.

In some example embodiments, wherein the photosensitive sensor circuitry comprises a first photosensitive sensor element and at least a second photosensitive sensor element. The photosensitive sensor circuitry is configured to generate a respective first and second digital measurement signal, each having an amplitude range from zero to maximum output level for each of the first and the second photosensitive sensor element. The processor circuitry is configured to combine the first and the second digital measurement signal to obtain a combined signal of increased amplitude.

The first and the second photosensitive sensor element, for example, can be arranged in an array of multiple photosensitive sensor elements. Similar to the previously described photosensitive sensor circuitry, the first and the second photosensitive sensor element each provide a respective first or a second digital measurement signal having an amplitude range from zero to maximum output level. The first and the second digital measurement signal can be transmitted to the processor circuitry to combine the first and the second digital measurement signal. The combined signal, for example, can be a sum of the spectral amplitude profiles of the first and the second digital measurement signal, which yields a combined signal of an amplified amplitude compared to the first or the second digital measurement signal. Combining the first and the second digital measurement signal, further, may amplify or emphasize target-specific amplitude signatures of the spectral amplitude profile, which may improve classifying the target.

In some example embodiments, the digital measurement signal is indicative of a pulse amplitude coded signal and wherein the processor circuitry is configured to assign the digital measurement signal to an emitter associated with the pulse amplitude coded signal.

The emitter, which can be, for example, a polychromatic radiation source, can emit the pulse amplitude coded signal which can be a temporal sequence of multiple light pulses varying regarding their intensity. Alternatively, the pulse amplitude coded signal is called pulse train. The digital measurement signal, generated by illuminating the photosensitive sensor circuitry with the pulse amplitude coded signal, thus, can show a temporal amplitude signature being indicative of the pulse amplitude coded signal of the emitter.

The emitter can emit successive pulse amplitude coded signals each having an individual sequence of multiple light pulses. Thus, the processor circuitry can distinguish between individual pulse amplitude coded signals, which may be beneficial if multiple pulse amplitude coded signals simultaneously impinge on the photosensitive sensor circuitry due to different path lengths of the pulse amplitude coded signals. This may reduce erroneous characterizations of surrounding targets.

According to a second aspect, further example embodiments of the present disclosure relate to a Lidar method, which intends to generate at least one digital measurement signal in response to detected light reflected by a target, wherein an amplitude range of the digital measurement signal ranges from zero to a maximum output level. The Lidar method further suggests to output the digital measurement signal with the amplitude range from zero to a maximum output level for determining characteristics of the target.

The method can be executed, for example, by the previously described Lidar sensor device and/or the Lidar system. It is obvious for a skilled person that the digital measurement signal can be generated, for example, by the photosensitive sensor circuitry of the Lidar device. As mentioned above, the digital measurement signal has an amplitude range, which ranges from zero to a maximum level. When executing the Lidar method by using the Lidar sensor device, the output terminal can output the digital measurement signal.

In some example embodiments of the present disclosure, the Lidar method further intends to determine characteristics of the target based on the digital measurement signal having the amplitude range from zero to the maximum output level.

The characteristics of the target can be determined by the processor circuitry of the Lidar system, when the Lidar method is executed by the Lidar system. Determining the characteristics of the target can be beneficial for automotive applications of the Lidar method. In such applications, the characteristics of surrounding vehicles can be used to classify those vehicles. Based on the characteristics, an autonomously driving vehicle, for example, may estimate a driving behavior of the surrounding vehicles, which can be helpful with regard of safe operation of the autonomously driving vehicle in road traffic.

In some example embodiments, the digital measurement signal is indicative of a spectral amplitude profile comprising respective signal amplitudes for a plurality of light wavelengths. The respective signal amplitude ranges for the plurality of light wavelengths range from zero to the maximum output level. The method further intends to train a machine learning network based on the digital measurement signal.

The machine learning network can be trained by feeding it with a plurality of digital measurement signals, which can be indicative of known targets. The machine learning network can be configured to detect recurring target-specific amplitude signatures, which can be associated with the characteristics of the known targets. The detected target-specific amplitude signatures of the known targets, thus, can be used for the characterization of unknown targets, such as vehicles.

In some example embodiments, the Lidar method further intends to feed the digital measurement signals with respective amplitude ranges from zero to a maximum output level into the trained machine learning network to classify targets.

The targets can, for example, be classified regarding their characteristics, such as color, surface condition or dimensions. In automotive applications the vehicles, for example, can be classified regarding their vehicle type with respect to their dimensions.

The characteristics of the target can be determined, for example, by feeding the machine learning network with the digital measurement signal of the target. As mentioned previously, the machine learning network can be trained with the digital measurement signals of known targets to detect target-specific amplitude signatures. For determining the characteristics of the target, the machine learning network can observe correlations between the target-specific amplitude signatures and the digital measurement signal of the (unknown) target. In case of a sufficient correlation between a respective target-specific amplitude signature and the digital measurement signal, the (unknown) target can be associated with the characteristics, which are indicative of the respective target specific amplitude signature. Thus, the target can be classified regarding its characteristics.

### Brief description of the Figures

Some examples of apparatuses and/or methods will be described in the following by way of example only, and with reference to the accompanying figures, in which may
- Fig. 1a: illustrates a Lidar sensor device;
- Fig. 1b: illustrates a digital measurement signal of the Lidar sensor device;
- Fig. 2: illustrates a Lidar system;
- Fig. 3: illustrates a Lidar system with a machine learning network;
- Fig. 4: illustrates a photosensitive sensor circuitry with an array of photosensitive sensor elements;
- Fig. 5: illustrates a Lidar system capturing simultaneously impinging pulse amplitude coded signals; and
- Fig. 6: shows a flow chart of a Lidar method.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Lidar sensor devices or Lidar systems can be used to sense their environment for a characterization of targets in the environment. In automotive applications, the Lidar sensor devices or the Lidar system, for example, can be used to sense the environment of a vehicle equipped with those. In particular, the Lidar systems or Lidar sensor devices can be used for operating driver assistance systems or autonomously driving vehicles.

For sensing their environment, the Lidar sensor devices use light pulses, which can be reflected by targets of the environment. Initially, the light pulses, for example, can be emitted by a radiation source, such as a flash or equivalent. The Lidar sensor device generates an analog signal, which is typically an electric signal, in response to the reflected light pulses.

In a conversion step, conventional Lidar sensor devices convert the analog signal to a digital measurement signal with noise cancelling. With noise cancelling, low-energy components of the analog signal, which fall below a predefined amplitude threshold are eliminated. The amplitude threshold, for example may be indicative of a predefined voltage or current which may have a similar scale as the noise, for example. However, those low-energy components of the analog signal, which fall below the amplitude threshold can be indicative of characteristics of the targets. Thus, for example, with an increasing signal-to-noise ratio (e.g. due to worsening environmental conditions, such as weather conditions or negative external influences) the amplitude threshold may increase, which can lead to the digital measurement signal being insufficient for a reliable characterization of the environment.

Example embodiments of the present disclosure relate to a Lidar sensor device, a Lidar system and a Lidar method, which can be used for the characterization of the targets by determining characteristics of the targets from the digital measurement signal having an amplitude range from zero to a maximum output level.

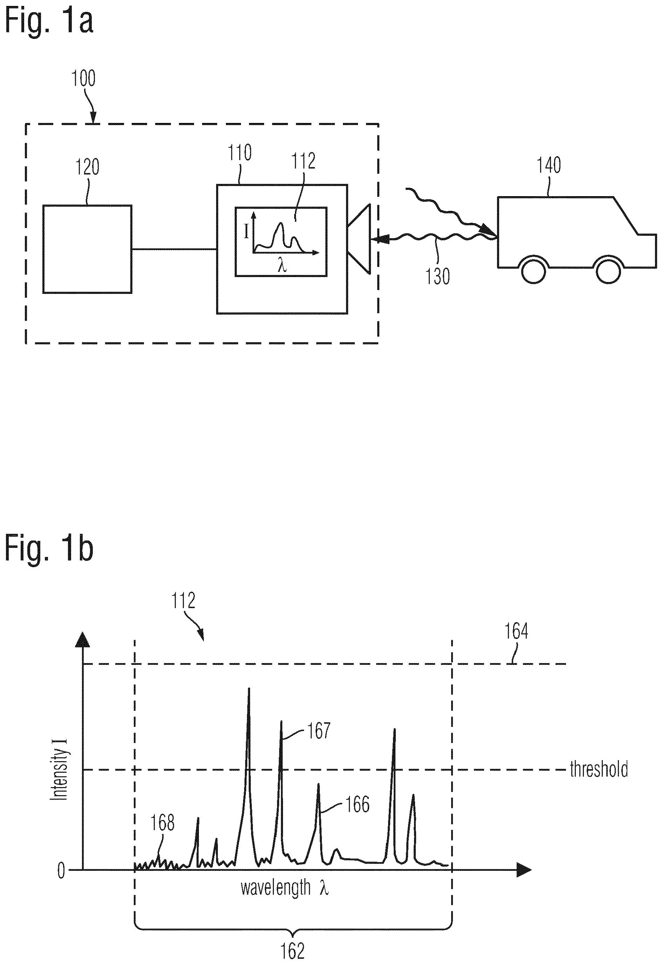

Fig. 1a illustrates a Lidar sensor device 100. The Lidar sensor device 100 comprises a photosensitive sensor circuitry 110 and an output terminal 120. The photosensitive sensor circuitry 110 is configured to generate a digital measurement signal 112 in response to detected light 130 reflected by a target 140. As shown in Fig. 1a, the target 140 can be, for example, a vehicle, especially in case of automotive applications of the Lidar sensor device 100. In order to keep a description of example embodiments of the present disclosure simple, it is assumed in the following that the detected light 130 is reflected by a single target 140. However, the skilled person having benefit from the present disclosure will appreciate that the detected light 130 can also be a result of reflections of multiple targets.

The detected light 130 generates an analog signal by impinging on a photosensitive sensor element of the photosensitive sensor circuitry 110. The photosensitive sensor circuitry is configured to convert the analog signal to the digital measurement signal 112. As illustrated in Fig. 1b, the measurement signal 112 has an amplitude range from zero to a maximum output level 164, which can be indicative of a maximum output level of an analog-to-digital converter (ADC) converting the analog signal to the digital measurement signal 112, within a wavelength range 162.

Conventional Lidar sensor devices apply filtering processes, such as noise cancelling, to the analog or digital measurement signal 112. Those filtering processes use an amplitude threshold, which can be indicative of a voltage of a current, for eliminating components of the digital measurement signal 112, which fall below the amplitude threshold. Thus, the conventional Lidar sensor devices eliminate noise 168, which cannot be used to determine characteristics of the target 140. Further, the filtering process may eliminate low-energy components 166 of the digital measurement signal 112, which may beneficially contribute to the characterization of the target 140, since they may arise, for example, from multiple reflections of light reflected by the target 140. Therefore, filtering processes using an amplitude threshold may only preserve high-energy components 167 of the digital measurement signal 112. Eliminating useful low-energy components 166 of the digital measurement signal 112 may deteriorate the characterization of the target 140 when using the conventional Lidar sensor devices.

Unlike the conventional Lidar sensor devices, the Lidar sensor device 100 preserves the low-energy components 166 and high-energy components 167 of the digital measurement signal 112 during the conversion of the analog signal to the digital measurement signal 112. Thus, the low-energy components 166 of the digital measurement 112 can beneficially contribute to the characterization of the target 140 by using the Lidar sensor device 100.

The output terminal 120 is coupled to the photosensitive sensor circuitry 110 and is configured to output the digital measurement signal 112 coming from the photosensitive sensor circuitry 110. The digital measurement signal 112, thus, can be passed to an external processor, which can be coupled to the output terminal 120, for determining characteristics of the target from the digital measurement signal 112.

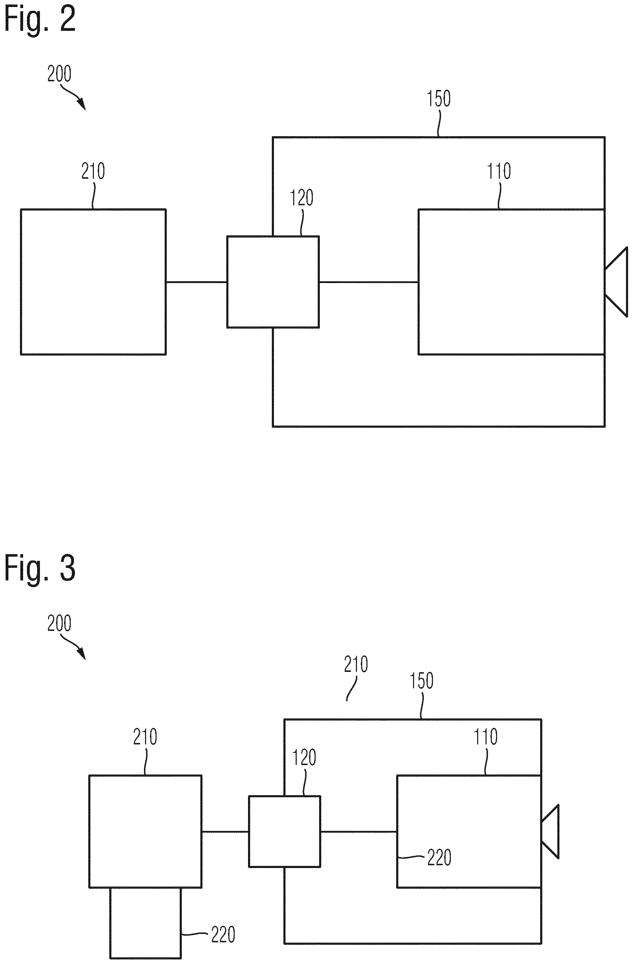

Such an external processor can be, for example, a processor circuitry 210, as shown in Fig. 2. A Lidar system 200 comprises the Lidar sensor device 100 and the processor circuitry 210. Here, the photosensitive sensor circuitry 110 and the output terminal 120 of the Lidar sensor device 100 is enclosed by a housing 150. The housing 150 may shield the photosensitive sensor circuitry 110 from external influences (e.g. dust or water). Further, the output terminal 120 can be enclosed or integrated in the housing 150 to serve as an interface between the photosensitive sensor circuitry 110 and the processor circuitry 210.

The processor circuitry 210 is configured to determine characteristics of the target 140 from the digital measurement signal 112. In some example embodiments, the digital measurement signal 112 is indicative of a spectral amplitude profile, which comprises a plurality of signal amplitudes for a plurality of respective wavelengths. In other words, the spectral amplitude profile can be, for example, a spectrum of the detected light 130 in a predetermined wavelength range. The respective signal amplitudes range, as mentioned previously, from zero to a maximum output level, as for an improved characterization of the target 140 the digital measurement signal 112 advantageously comprises the signal amplitudes of a whole detectable range. The signal amplitudes can be indicative, for example, for an intensity.

Unlike conventional Lidar sensor devices, the Lidar sensor device 100, thus, provides an unfiltered digital measurement signal 112 to the processor circuitry 210. Therefore, the digital measurement signal 112 may have a signal amplitude for each of the plurality of wavelengths, which allows the processor circuitry 112 to detect target-specific amplitude signatures within the spectral amplitude profile. The target-specific amplitude signatures can be associated with characteristics of the target 140. Since conventional Lidar sensor devices eliminate signal amplitudes of the spectral amplitude profile, for example, with noise cancelling, the filtered digital measurement signal cannot show those target-specific amplitude signatures. Using the processor circuitry, those target-specific amplitude signatures can be compared with target-specific amplitude signatures of known targets. In case of a sufficient correlation between target-specific amplitude signatures of the known targets and the target 140, predefined characteristics of the known targets can be assigned to the target 140. For a characterization of the target 140, additionally, it can be classified by reference to its characteristics. For example, in case of automotive applications of the Lidar system, the characteristics may be indicative with regard to a vehicle type of the target 140. Thus, the target 140 can be, for example, classified regarding various vehicle types, such as trucks, busses, cars or motorcycles.

Classifying the target 140 may be beneficial with regard to applications of the Lidar system 200 in autonomously driving vehicles. Here, the vehicle types of surrounding vehicles can be associated with different ways of driving behavior, which may allow the autonomously driving vehicle to move within road traffic more safely.

In order to further improve the characterization of the target 140, the Lidar system 200 can be upgraded by a machine learning network 220 coupled to the processor circuit 210, as shown in Fig. 3.

The machine learning network 220 can be trained with an amount of digital measurement signals 112, wherein the machine learning network 220 is able to process a larger amount of digital measurement signals 112 than other data processing structures. For example, the machine learning network 220 performs pattern recognition on the large amount of digital measurement signals 112, being indicative of the characteristics of known targets, to detect target-specific amplitude signatures. Those target-specific amplitude signatures can be associated with the characteristics of the known targets. In case of a vehicle being the known target, the characteristics can be, for example, dimensions, surface condition (e.g. a color or a structure of a varnish of the vehicle).

Thus, the trained machine learning network 220 can be utilized to classify the target 140 with respect to the target's 140 characteristics by comparing the digital measurement signal 112 of the target 140 with the target-specific amplitude signatures detected by the machine learning network 220. In case of a sufficient correlation between target-specific amplitude signatures of the known targets and the target 140, predefined characteristics of the known targets can be assigned to the target 140. Additionally, using the trained machine learning network 220, the target 140 can be classified, for example, regarding its vehicle type.

The skilled person having benefit from the present disclosure will appreciate that the characterization of the target 140 by using the machine learning network 220 can be more reliable as the machine learning network 220 can characterize the target 140 with reference to the larger amount of digital measurement signals 112 than other data processing structures, for example, executed by the processor circuitry 210.

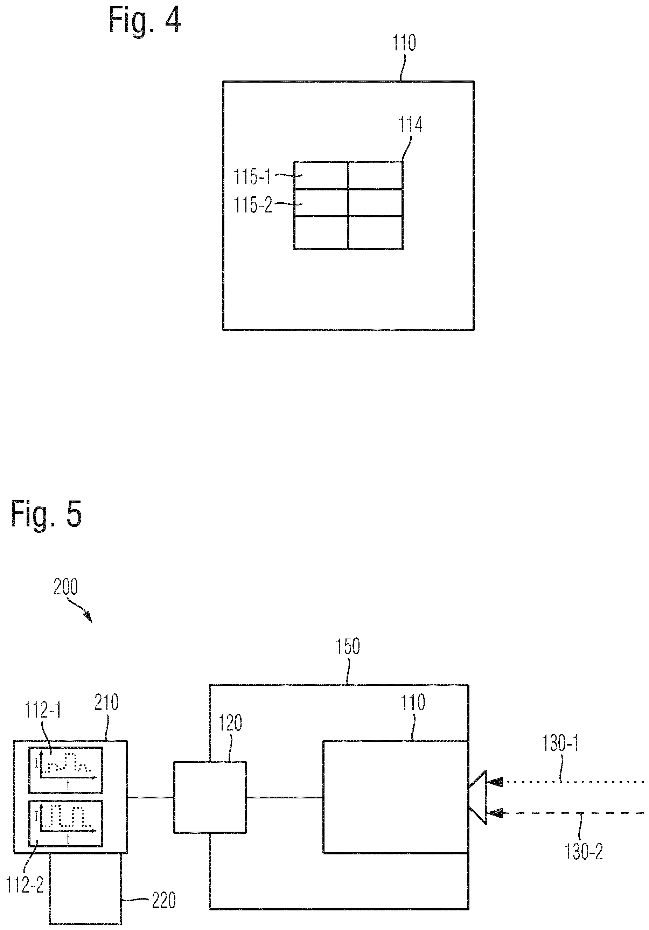

For a further improvement regarding the characterization of the target 140, the photosensitive sensor circuitry 110 of the Lidar sensor device 100 can be further improved, as shown in Fig. 4.

In some example embodiments of the Lidar sensor device 100 or Lidar system 200, the photosensitive sensor circuitry 110 comprises an array 114 of photosensitive sensor elements. For example, the array 114 can comprise a first photosensitive sensor element 115-1 and at least a second photosensitive sensor element 115-2, as shown in Fig. 4. Example embodiments of the present disclosure are not limited to two photosensitive sensor elements but can have more photosensitive sensor elements. For a simplification, the following description of the example embodiment of Fig. 4 only refers to the first and the second photosensitive sensor element 115-1 and 115-2.

Each photosensitive sensor element of the array 114 provides a respective digital measurement signal 112. Thus, the first photosensitive sensor element 115-1 and the second photosensitive sensor element each provide a respective first or second digital measurement signal. The skilled person having benefit from the present disclosure will appreciate that the first and the second photosensitive sensor element 115-1 and 115-2 can be synchronized to observe the detected light 130 simultaneously. Thus the first and the second digital measurement signal are synchronized. Similar to the digital measurement signal, the first and the second digital measurement signal have an amplitude range ranging from zero to a maximum output level.

In case of an implementation of the array 114 in the Lidar system 200, the first and the second digital measurement signal can be forwarded to the processor circuitry 210. The processor circuitry 210 can further be configured to combine the first and the second digital measurement signal.

A combined signal comprising the first and the second digital measurement signal can be, for example, a sum of a respective first and second spectral amplitude profile. The combined signal, thus, has an amplified or increased spectral amplitude profile compared to the first or the second spectral amplitude profile. If the first and the second spectral amplitude profile result from reflections of the same target 140, the target-specific amplitude signatures of the combined signal may be amplified compared to those of one of the first or the second digital measurement signal.

Using the combined signal for the characterization of the target 140, the characterization, thus, can be more reliable, since the target-specific amplitude signatures may be amplified or emphasized.

Regarding automotive applications of the Lidar system 200, multiple targets 140 can be located in a surrounding of the Lidar system 200. In order to generate reflections of the targets 140, an emitter (not shown herein) can emit successive light pulses, which can be reflected by the targets 140. The successive light pulses can be reflected by multiple targets 140. Due to different path lengths of the light pulses from the emitter to the photosensitive sensor circuitry 110, the detected signal can be a combination of reflections of successive light pulses.

Therefore, the digital measurement signal 112 can be indicative of reflections of the successive light pulses, which may cause an erroneous characterization and/or classification of the targets 140.

In order to prevent an erroneous characterization and/or classification of the targets 140, the Lidar system 200 may use pulse amplitude coded signals, which can be assigned to respective light pulses of the emitter. Such a Lidar system is illustrated in Fig. 5.

The pulse amplitude coded signals of the emitter can be indicative of a periodic or aperiodic series of light pulses, whose amplitudes, lengths, time stamps and/or intensities may differ depending on a code structure of the respective pulse amplitude coded signal. The pulse amplitude coded signals can also be called pulse trains.

In the example of Fig. 5, there are two reflected pulse amplitude coded signals, a first pulse amplitude coded signal 130-1 and a second pulse amplitude coded signal 130-2, which can be reflected by different targets 140 and impinge simultaneously on the photosensitive sensor circuitry 110.

The resulting digital measurement signal, which is generated by the photosensitive sensor circuitry 110 in response the first and the second pulse amplitude coded signal 130-1 and 130-2, is indicative of a combination of those signals 130-1 and 130-2. This resulting digital measurement signal has an amplitude range ranging from zero to a maximum output level. Thus, the resulting digital measurement signal is indicative of the pulse train's 130-1 or 130-2 light pulses, which can be poorly reflected, for example, by black colored targets 140.

The resulting digital measurement signal can forwarded to the processor circuity 210 for a characterization of the targets 140, which reflected the pulse amplitude coded signals 130-1 and 130-2. In example embodiments according to Fig. 5, the processor circuitry 210 is configured to separate the digital measurement signal coming from the output terminal 120 of the Lidar sensor device 100 into a respective first and second coded digital measurement signal 112-1 and 112-2. For example, by knowing the code structure of the respective pulse trains 130-1 and 130-2 the processor circuitry 210 can assign parts of the resulting digital measurement signal to the first or the second coded digital measurement signal 112-1 or 112-2. The emitter can be coupled with the processor circuitry 210 to communicate the code structure. The first and the second coded digital measurement signal 112-1 and 112-2 are indicative of their respective first and second pulse amplitude coded signal 130-1 and 130-2.

Previously described methods using the processor circuitry 210 and/or the machine learning network 220 for the characterization of the target 140 can be applied to the first and the second coded digital measurement signals 112-1 and 112-2. Thus, the system 200, as shown in Fig. 5 can be used for a characterization of multiple targets 140 reflecting the amplitude coded signals 130-1 and 130-2.

In conventional Lidar sensor devices filtering processes, such as noise cancelling, eliminate parts of the digital measurement signal, which fall below the amplitude threshold. However, those parts of the digital measurement signal, for example, can be indicative of one poorly reflected light pulse of the pulse train. Since those parts of the digital measurements are eliminated, the resulting digital measurement signal comprising residual parts of the pulse trains can be inappropriate for the process circuitry 210 to separate it into the first and the second coded digital coded measurement signal 112-1 and 112-2 for the characterization of the targets 140. Thus, the characterization may fail by using the conventional Lidar sensor devices or Lidar systems.

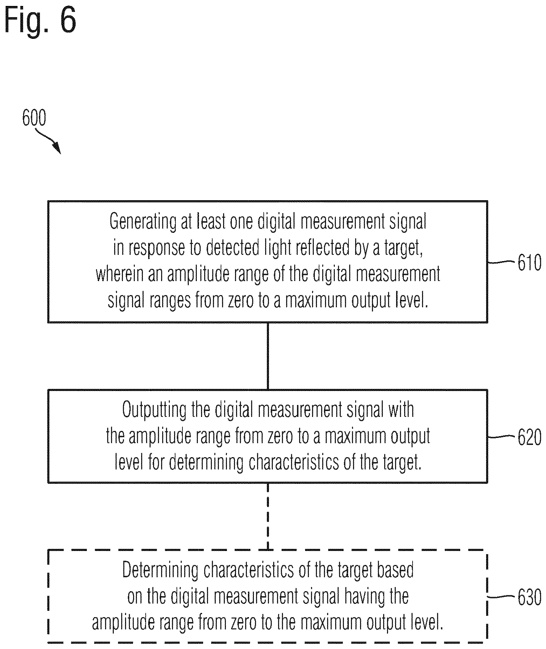

Further example embodiments of the present disclosure can relate to a Lidar method 600, which is illustrated in the flow chart of Fig. 6. Dashed lines of the flow chart indicate optional steps of the method 600. The Lidar method 600 can be carried out, for example, by the Lidar sensor device 100. For example, the photosensitive sensor circuitry 110 can be utilized for generating 610 at least one digital measurement signal 112 with an amplitude range ranging from zero to a maximum output level.

The output terminal 120 of the Lidar sensor device 100 or the Lidar system 200 can be used for outputting 620 this digital measurement signal 112 for determining characteristics of the target 140. As mentioned before, the output terminal 120, for example, can serve as an interface between the photosensitive sensor circuitry 110 and the processor circuitry 210, which can be used for determining 630 the characteristics of the target 140.

The method 600 further can suggest to train the machine learning network 220 with multiple digital measurement signals 112 in a previously described manner and to characterize and classify the target 140 by applying the trained machine learning network 220 to the digital measurement signal 112.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a processor circuitry", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A Lidar sensor device (100), comprising:
photosensitive sensor circuitry (110) configured to generate at least one digital measurement signal (112) in response to detected light (130), wherein an amplitude range of the digital measurement signal (112) ranges from zero to a maximum output level; and
an output terminal (120) configured to output the digital measurement signal (112) with the amplitude range from zero to a maximum output level.

2. The Lidar sensor device (100) of claim 1, comprising a housing (150) enclosing the photosensitive sensor circuitry (110), wherein the housing (150) comprises the output terminal (120) as a signal interface between the photosensitive sensor circuitry (110) and external processor circuitry (210) for determining characteristics of a target (140) based on the digital measurement signal (112).

3. A Lidar system (200), comprising
the Lidar sensor device (100) of any one of the previous claims; and
processor circuitry (210) coupled to the Lidar sensor device's (100) output terminal (120) and configured to determine characteristics of a target (140) based on the digital measurement signal (112) having the amplitude range from zero to the maximum output level.

4. The Lidar system (200) of claim 3, wherein the digital measurement signal (112) is indicative of a spectral amplitude profile comprising respective signal amplitudes for a plurality of light wavelengths, wherein the respective signal amplitude ranges for the plurality of light wavelengths range from zero to the maximum output level, wherein the processor circuitry (210) is configured to determine characteristics of the target (140) based on the spectral amplitude profile.

5. The Lidar system (200) of claim 3 or 4, wherein the processor circuitry (210) further comprises a machine learning network (220) configured to classify the target (140) based on comparing the spectral amplitude profile with predetermined target-specific amplitude signatures.

6. The Lidar system (200) of any one of the claims 3 to 5, wherein the photosensitive sensor circuitry (110) comprises a first photosensitive sensor element (115-1) and at least a second photosensitive sensor element (115-2), wherein the photosensitive sensor circuitry (110) is configured to generate a respective first and second digital measurement signal (112-1, 112-2), each having an amplitude range from zero to maximum output level for each of the first and the second photosensitive sensor element (115-1, 115-2), wherein the processor circuitry (210) is configured to combine the first and the second digital measurement signal (112-1, 112-2) to obtain a combined signal of increased amplitude.

7. The Lidar system (200) of any one of the claims 3 to 6, wherein the digital measurement signal (112) is indicative of a pulse amplitude coded signal (130-1, 130-2) and wherein the processor circuitry (210) is configured to assign the digital measurement signal (120) to an emitter associated with the pulse amplitude coded signal.

8. A Lidar method (600), comprising:
Generating (610) at least one digital measurement signal in response to detected light reflected by a target, wherein an amplitude range of the digital measurement signal (112) ranges from zero to a maximum output level; and
Outputting (620) the digital measurement signal (112) with the amplitude range from zero to a maximum output level for determining (630) characteristics of the target.

9. The method (600) of claim 8, further comprising determining (630) characteristics of the target based on the digital measurement signal (112) having the amplitude range from zero to the maximum output level.

10. The method (600) of any of the claims 8 and 9, wherein the digital measurement signal (112) is indicative of a spectral amplitude profile comprising respective signal amplitudes for a plurality of light wavelengths, wherein the respective signal amplitude ranges for the plurality of light wavelengths range from zero to the maximum output level, the method (600) further comprising training a machine learning network based on the digital measurement signal (112).

11. The method of claim 10, further comprising feeding the digital measurement signals (112) with respective amplitude ranges from zero to a maximum output level into the trained machine learning network (220) to classify targets (140).
